# EUROPEAN PATENT APPLICATION

(11) **EP 1 811 763 A2**
(43) Date of publication of application: **25.07.2007**
(21) Application number: 06122511.6
(22) Date of filing: 18.10.2006
(51) Int. Cl.: H04N 1/32

(54) **Image forming system, image scanning device, and control device**

(30) Priority: 18.01.2006 JP 2006010359
(71) Applicant: MURATA KIKAI KABUSHIKI KAISHA, Kyoto (JP)
(72) Inventor: Kuwahara, Tetsuya, c/o Murata Kikai K. K., Kyoto 612-8686 (JP)
(74) Representative: W.P. Thompson & Co.

(57) **Abstract**

The image forming system includes a scanner 1, an image forming device 6 and a terminal device 3. The scanner scans an original document to obtain image data, and stores the image data in a remote storage device. The terminal device 3 controls printing by the remote image forming device 6 in accordance with the image data stored in the storage device. The scanner includes an accepting unit, an assigning unit, and a storage unit. The accepting unit accepts information such as a paper size and a number of sets. The assigning unit assigns a file name including the information accepted by the accepting unit to the image data. The storage unit stores the image data assigned with the file name into the storage device. The terminal device 3 includes a control unit 31 for controlling printing in accordance with the information included in the file name of the image data stored in the storage device.

## Description

### BACKGROUND OF THE INVENTION

### 1. Field of the Invention

The present invention relates to an image forming system including an image scanning device, an image forming device, and a control device, and also relates to the image scanning device and the control device constituting the image forming system. Further, the image scanning device stores image data obtained by scanning an original document into a storage device. The image forming device prints an image onto paper. The control device controls the image forming device to print out an image relating to the image data stored in the storage device.

### 2. Description of the Related Art

In a proposed image forming system, an image scanning device, a control device, and an image forming device (a printer) are connected via a network. The image scanning device scans an original document, and obtains image data. The control device is a personal computer or the like including a storage device. In the image forming system, the image forming device prints out the image data obtained by the image scanning device.

The image scanning device, the control device, and the image forming device are connected via a Local Area Network (LAN). When the image scanning device obtains image data of an original document, the image scanning device stores the obtained image data into a remote storage device. The control device monitors the image data stored in the storage device. When the storage device stores image data, the control device provides the image data to the image forming device, and controls a printing operation of the image forming device.

In such an image forming system, when the image scanning device includes a color scanning function and the image forming device includes a color printing function, the image data obtained by the image scanning device can be printed out by color by the image forming device. That is, a functional equivalent to a color copier can be realized. When the storage device stores image data, since the control device is monitoring the storage device, the control device controls the image forming device to carry out a printing operation based on the image data. Accordingly, a user of the image forming system can print out an image from the image forming device by operating the image scanning device and without operating the control device. Since the remote control device controls an image forming process of the image forming device, an image obtained by the image scanning device can be printed out from the image forming device without installing a printer driver of the image forming device in the image scanning device.

However, in the conventional image forming system, when a remote image forming device prints out an image relating to image data obtained by the image scanning device, a setting cannot be made regarding the number of sets to be printed, the paper size, and whether or not sorting of papers is necessary. Therefore, in order to set the number of sets, the paper size, and whether or not sorting is necessary and then to print out an image by the image forming device, the image data obtained by the image scanning device is required to be stored in the storage device of the control device. In addition, the control device is required to set the number of sets, the paper size, and whether or not sorting is necessary. This problem becomes even more significant when the image scanning device and the control device are located away from one another.

### SUMMARY OF THE INVENTION

In order to overcome the problems described above, preferred embodiments of the present invention provide an image forming system, and an image scanning device and a control device constituting the image forming system. In the image forming system, the image scanning device accepts information relating to printing of an image, and stores image data with a file name including such information into a storage device. A control device controls a printing operation of an image forming device in accordance with the image data and the information included in the file name of the image data. Accordingly, the information relating to the printing of the image can be set at the image scanning device that scans an original document, and an image can be printed out from a remote image forming device in accordance with the set information.

Preferred embodiments of the present invention also provide an image forming system, and an image scanning device and a control device constituting the image forming system. In the image forming system, a file name including the number of sets of an image to be printed, the paper size, or information indicating whether or not sorting is necessary is assigned to image data. Accordingly, the number of sets, the paper size, and whether or not sorting is necessary can be set at the image scanning device that scans an original document. A remote image forming device can print out an image in accordance with the set information.

According to the preferred embodiments of the present invention, the control device is not required to include a setting of the information relating to the printing of an image. The information relating to the printing of an image can be set in the image scanning device that obtains image data of an original document. The image forming device can print out the image in accordance with the set information. Compared with a case where the information relating to the printing of the image and the image data are separately processed, the above effects can be obtained by an even more simple process.

According to the preferred embodiments of the present invention, the control device is not required to set the number of sets to be printed, the paper size, and whether or not sorting is necessary. The number of sets, the paper size, and whether or not sorting is necessary can be set in the image scanning device that obtains the image data of the original document, and the image can be printed out by the image forming device.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

Fig. 1 is a block diagram illustrating a configuration of an image forming system according to a preferred embodiment of the present invention.

Fig. 2 is a block diagram illustrating a configuration of a terminal device.

Fig. 3 is a flowchart illustrating a processing procedure of a control unit when accepting information relating to a printing operation.

Fig. 4 is a flowchart illustrating a processing procedure of the control unit relating to the printing operation.

Fig. 5 is a flowchart illustrating a processing procedure of the control unit relating to the printing operation.

### DETAILED DESCRIPTION OF PREFERRED EMBODIMENTS

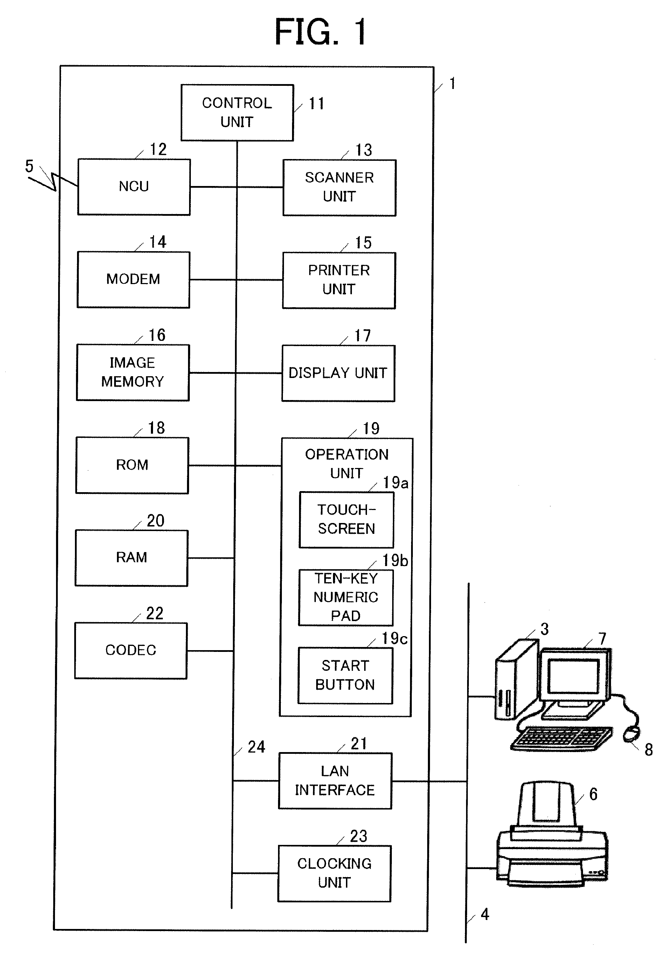

Preferred embodiments of the present invention will be described with reference to the accompanying drawings. Fig. 1 is a block diagram illustrating a configuration of an image forming system according to a preferred embodiment of the present invention. The image forming system according to the present preferred embodiment includes a Multi Function Peripheral (MFP) (an image scanning device) 1 having at least a scanner function, a terminal device (a control device) 3 including a storage device 33, and an image forming device (a printer) 6. The MFP 1, the terminal device 3, and the image forming device 6 are connected via a LAN 4.

The MFP 1 includes a control unit 11, a scanner unit 13, an image memory 16, and a printer unit 15. The control unit 11 includes a Central Processing Unit (CPU), and controls obtaining and printing of image data via a bus 24 to realize a copy function of the MFP 1. The scanner unit 13 scans an original document, and obtains image data of the original document. The image memory 16 temporarily stores the obtained image data. The printer unit 15 prints an image onto paper in accordance with the image data stored in the image memory 16.

A Read Only Memory (ROM) 18 and a Random Access Memory (RAM) 20 are connected to the bus 24. The ROM 18 includes a flash memory. The ROM 18 stores various control programs necessary for an operation of the MFP 1. The control unit 11 fetches a control program stored in the ROM 18 to the RAM 20, and executes the control program to realize various functions such as the copy function and the scanner function of the MFP 1.

The scanner unit 13 includes a light source, which irradiates light on the original document, and an optical element, such as a line Charge-Coupled Device (CCD), which converts the reflected light from the original document into an electric signal. The scanner unit 13 acquires color image data of the original document in accordance with the electric signal converted by the line CCD. The scanner unit 13 applies the obtained image data to the image memory 16.

The printer unit 15 is an electrophotographic monochrome printer including a photoconductive drum and a fixing unit or the like. The printer unit 15 includes a flash ROM (not illustrated) storing a program for an image forming process. The printer unit 15 prints image data onto paper in accordance with the program stored in the flash ROM.

The MFP 1 includes a Network Control Unit (NCU) 12, a Madulator-Demodulator (MODEM) 14, and a Coder-Decoder (CODEC) 22. The NCU 12 and the MODEM 14 transmit and receive image data by facsimile communication. The CODEC 22 encodes and decodes transmission image data and received image data in accordance with a prescribed encoding scheme, e.g. the Modified Huffman (MH), the Modified Relative Address Designate (MR), or the Modified MR (MMR) scheme. The control unit 11 controls transmission and reception of image data, scanning of an original document, and an image forming process to realize a facsimile function.

The MODEM 14 is connected to the bus 24. The MODEM 14 includes a function for demodulating analog image data input from a Public Switched Telephone Network (PSTN) into digital image data, and for modulating image data received from the image memory 16 via the bus 23 by the control of the control unit 11 into an analog signal.

The NCU 12 is hardware for making and breaking a communication line 5 between the MFP 1 and the PSTN. The NCU 12 establishes a connection between the MODEM 14 and the PSTN according to the control of the control unit 11.

The CODEC 22 encodes image data scanned by the scanner unit 13 according to the control of the control unit 11, and applies the encoded image data to the MODEM 14. The CODEC 22 decodes image data received in facsimile communication, and stores the decoded image data in the image memory 16.

The MFP 1 also includes a LAN interface 21 connected to the bus 24. The terminal device 3 and the image forming device (printer) 6 are connected to the LAN interface 21 via the LAN 4. The image forming device 6 is also an electrophotographic printer like the printer unit 15 of the MFP 1. However, the image forming device 6 prints out color image data in accordance with the image data. The image forming device 6 includes a sorting function for sorting papers.

An operation unit 19, a display unit 17, and a clocking unit 23 are also connected to the bus 24. The operation unit 19 is operated for operating the MFP 1. The clocking unit 23 clocks date and time. The display unit 17 includes a Liquid Crystal Display (LCD) for displaying an operation status of the MFP 1 and software keys for operating the MFP 1.

The operation unit 19 includes a resistive or capacitance touchscreen 19a. The operation unit 19 accepts an operation of the software keys displayed on the display unit 17, and the control unit 11 detects an operation status of the touchscreen 19a. The operation unit 19 includes push-button keys such as a ten-key numeric pad 19b and a start key 19c or the like. The ten-key numeric pad 19b is operated for setting a number of sets of an image to be printed, for example.

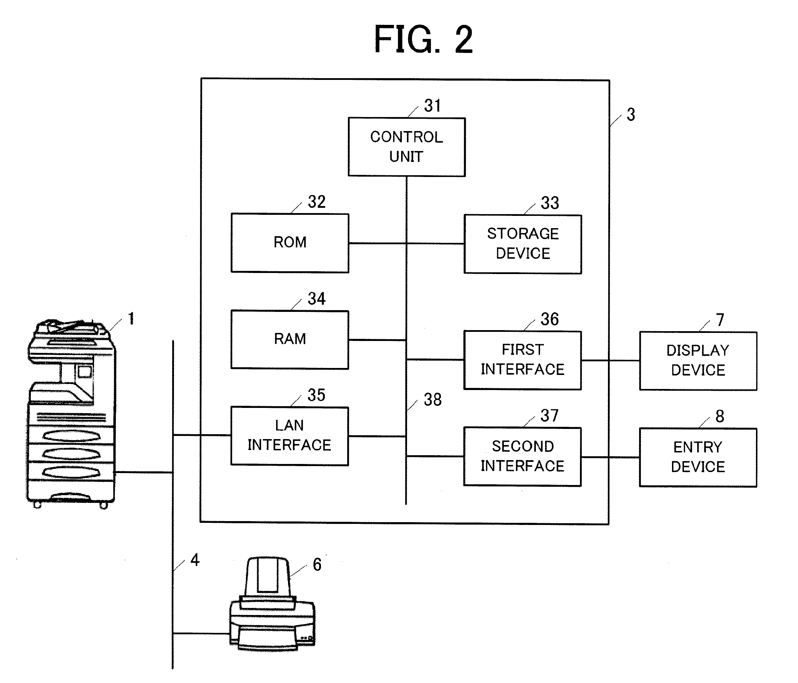

Fig. 2 is a block diagram illustrating a configuration of the terminal device 3. For example, the terminal device 3 is a personal computer. The terminal device 3 includes a control unit 31 including a timer function, a ROM 32, a RAM 34, a storage device 33, and a LAN interface 35. The ROM 32, the RAM 34, the storage device 33, and the LAN interface 35 are connected to the control unit 31 via a bus 38. The terminal device 3, the MFP 1, and the image forming device 6 are connected via the LAN 4 to transmit and receive various data. The storage device 33 includes a hard disk or the like. The storage device 33 stores a shared folder, which can be accessed from the MFP 1 via the LAN 4. The ROM 32 and the storage device 33 store a program necessary for an operation of the control unit 31, e.g., a printer driver of the image forming device 6. The control unit 31 fetches a program stored in the ROM 32 and the storage device 33 to the RAM 34, and executes the fetched program to control an image forming process of the image forming device 6 in accordance with the image data and information relating to a printing operation stored in the storage device 33.

A first interface 36 and a second interface 37 are also connected to the bus 38. A display device 7, such as an LCD, is connected to the first interface 36. An entry device 8, such as a mouse and a keyboard, is connected to the second interface 37.

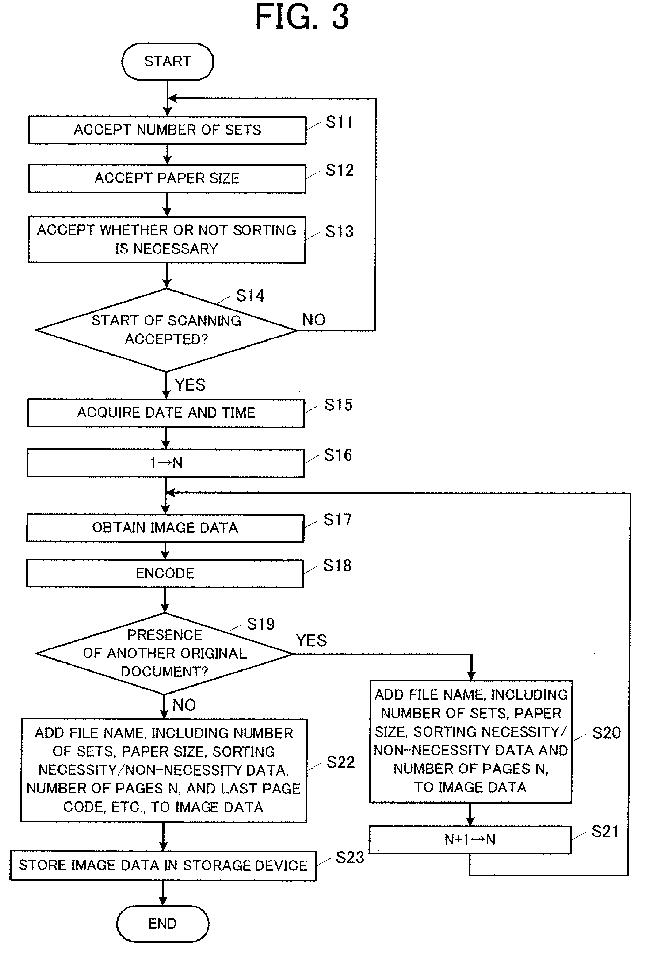

Fig. 3 is a flowchart illustrating a processing procedure of the control unit 11 carried out when accepting information relating to an image forming method. By detecting an operation status of the ten-key numeric pad 19b, the control unit 11 of the MFP 1 accepts a number of sets of an image to be printed (step S11). Next, by detecting an operation status of the touchscreen 19a, the control unit 11 accepts a paper size, e.g., A3, A4 or B4 size (step S12). By detecting an operation status of the touchscreen 19a, the control unit 11 accepts whether or not sorting is required (step S13).

By detecting an operation status of the start key 19c, the control unit 11 determines whether or not a start of scanning of an original document has been accepted (step S14). When a determination is made that the start of scanning has been accepted (step S14: YES), the control unit 11 acquires a clock result from the clocking unit 23 (step S15). When a determination is made that a start of the scanning has not been accepted (step S14: NO), the control unit 11 returns the process to step S11.

After the process of step S15, the control unit 11 substitutes "1" to a variable N indicating a number of sheets of the original documents acquired (step S16).

The control unit 11 scans an original document, and obtains image data (step S17). Then, the control unit 11 compresses and encodes the obtained image data (step S18). For example, the control unit 11 compresses and encodes the image data into Joint Photographic Experts Group (JPEG) image data.

The control unit 11 determines whether or not there is another original document (step S19). For example, when the control unit 11 detects an operation of the start key 19c within a prescribed period of time from when the image data has been obtained, the control unit 11 determines that there is another original document. When the start key 19c is not operated within a prescribed period of time, the control unit 11 determines that there is no other original document. When a determination is made that there is another original document (step S19: YES), the control unit 11 adds a file name to the compressed image data (step S20). Further, the file name includes date and time when the image data has been acquired, a job ID, a sorting necessity/non-necessity data indicating whether or not sorting is necessary, a number of sets, a paper size, and a number of pages N of the original document. For example, the control unit 11 adds a file name "200512131200_00000000001_S_002_A4_0001.jpg". "200512131200" indicates information of date and time, i.e., December 13, 2005, 12:00. "00000000001" is a job ID. "S" is the sorting necessity/non-necessity data indicating that sorting is necessary. "002" indicates a number of sets. "A4" indicates a paper size. "0001" indicates a number of pages N. Further, when sorting is not necessary, a file name including sorting necessity/non-necessity data of characters "NS", instead of the character "S", is added to the image data.

When the process of step S20 has been completed, the control unit 11 adds "1" to "N" (step S21). Then, the control unit 11 returns the process to step S17.

When a determination is made that there is no other original document (step S19: NO), the control unit 11 adds a file name to the compressed image data (step S22). Further, the file name includes date and time when the image data has been obtained, a job ID, sorting necessity/non-necessity data, a number of sets, a paper size, a number of pages N of the original document, and information indicating that it is the last page. For example, the control unit 11 adds a file name "200512131200_00000000001_S_002_A4_0002E.jpg". "0002E" indicates a number of pages, and the character "E" indicates that it is the last page.

After the process of step S22, the control unit 11 transmits the image data with the file name assigned at step S20 or step S22 to the storage device 33 by the Server Message Block (SMB) protocol to store the image data into a prescribed shared folder of the storage device 33 (step S23). Then, the process for accepting the information relating to the printing is completed.

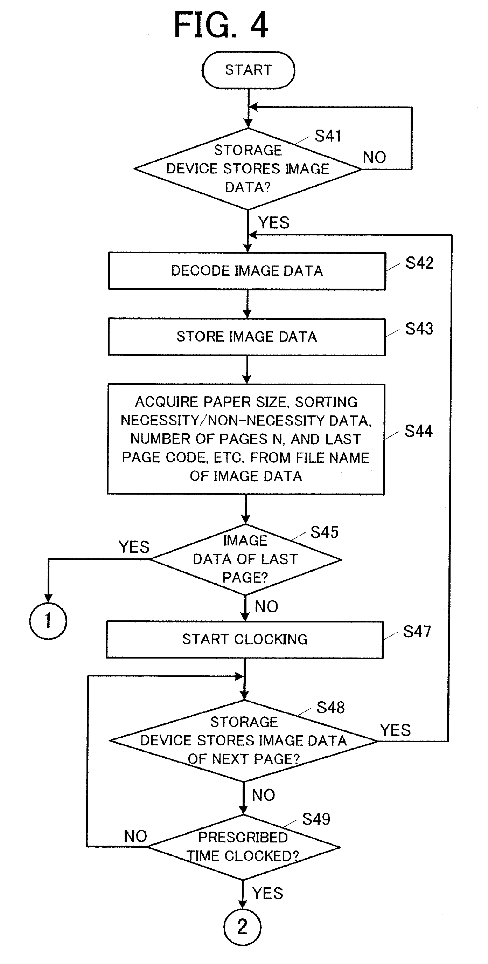

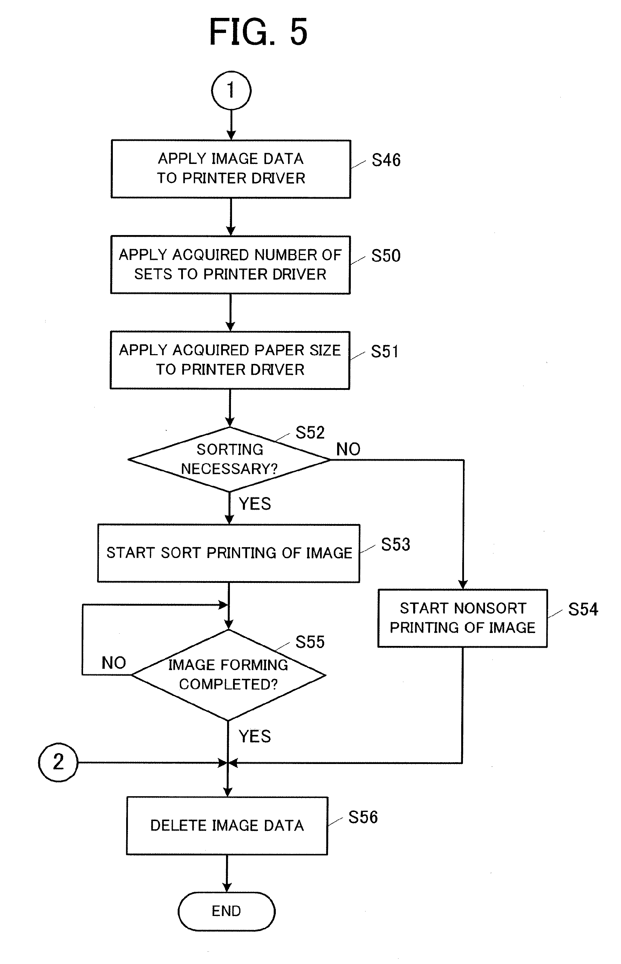

Fig. 4 and Fig. 5 are flowcharts illustrating a processing procedure of the control unit 31 relating to an image forming process. The control unit 31 periodically detects a file name of the image data stored in a prescribed shared folder of the storage device 33 to determine whether or not the storage device 33 stores JPEG image data (step S41). When a determination is made that the storage device 33 stores the image data (step S41: YES), the control unit 31 fetches the image data stored in the storage device 33 and decodes the image data into bitmap image data (step S42). The control unit 31 stores the decoded image data into the storage device 33 (step S43). When a determination is made that the storage device 33 does not store the image data (step S41: NO), the control unit 31 returns the process to step S41.

After the process of step S43, the control unit 31 obtains following information from the file name of the image data: date and time when the image data has been obtained, a job ID, sorting necessity/non-necessity data, a number of sets, a paper size and a number of pages N of the original document or the like (step S44) .

Next, the control unit 31 determines whether or not the decoded image data is image data of the last page in accordance with the obtained information (step S45). When a determination is made that the decoded image data is the image data of the last page (step S45: YES), the control unit 31 applies the image data decoded at step S42 to the printer driver (step S46).

When a determination is made that the decoded image data is not the image data of the last page (step S45: NO), the control unit 31 starts clocking (step S47). The control unit 31 determines whether or not image data of a next page is stored in the storage device 33 (step S48). That is, the control unit 31 determines a presence or an absence of image data having the same job ID and indicating a page number of the next page.

In case of a presence of image data of a next page (step S48: YES), the control unit 31 returns the process to step S42. In case of an absence of the image data of the next page (step S48: NO), the control unit 31 determines whether or not a prescribed time has been clocked (step S49). When a determination is made that the prescribed time has not been clocked (step S49: NO), the control unit 31 returns the process to step S48.

When the image data is sent to the printer driver at step S46, the control unit 31 applies the number of sets acquired at step S44 to the printer driver (step S50). Then, the control unit 31 applies the paper size acquired at step S44 to the printer driver (step S51).

Next, the control unit 31 determines whether or not sorting is necessary in accordance with the sorting necessity/non-necessity data acquired at step S44 (step S52). When a determination is made that sorting is necessary (step S52: YES), the control unit 31 starts sort printing of an image by the printer driver (step S53). When a determination is made that sorting is not necessary (step S52: NO), the control unit 31 starts nonsort printing by the printer driver (step S54).

When the process of step S53 has been completed, the control unit 31 detects a response from the printer driver, and determines whether or not an image forming process has been completed (step S55). When a determination is made that the image forming process has not been completed (step S55: NO), the control unit 31 returns the process to step S55.

When a determination is made that the image forming process has been completed (step S55: YES), or when the process of step S54 has been completed, or when a determination is made at step S49 that the prescribed time has been clocked (step S49: YES), the control unit 31 deletes the converted bitmap image data and the original image data (step S56), and ends the process.

In the image forming system configured as described above, information relating to printing of an image, e.g. the number of sets, the paper size, and whether or not sorting is necessary, is not required to be set in the terminal device 3. The number of sets, the paper size, and whether or not sorting is necessary can be set in the MFP 1 that scans an image, and the image can be printed out from the mage forming device 6 in accordance with the set information.

An image can be printed out from the remote image forming device 6 without installing a printer driver for controlling a printing operation of the remote image forming device 6 in the MFP 1.

Compared with a case in which the information relating to the printing of the image and the image data are separately processed, the above effects can be achieved by an even more simple process.

In the above-described preferred embodiment, a file name including a number of sets, a paper size, and information indicating whether or not sorting is necessary is assigned to the image data. As another preferred embodiment, other information relating to the printing of the image, for example, data indicating whether or not a color printing is necessary, can be included in a file name, and such a file name can be assigned to the image data.

While the present invention has been described with respect to preferred embodiments thereof, it will be apparent to those skilled in the art that the disclosed invention may be modified in numerous ways and may assume many embodiments other than those specifically set out and described above.

## Claims

1. An image forming system comprising:
an image scanning device which stores image data obtained by scanning an original document into a storage device;
an image forming device which prints an image onto paper; and
a control device which controls the image forming device to print the image data stored in the storage device,
wherein the image scanning device includes:
an accepting unit arranged to accept information relating to printing of the image,
an assigning unit arranged to assign a file name including the information accepted by the accepting unit to the scanned image data, and
a storage unit arranged to store the image data having the assigned file name to the storage device,
wherein the control device includes a control unit arranged to control the printing by the image forming device in accordance with the information included in the file name of the image data.

2. An image forming system according to claim 1, wherein the accepting unit accepts the information indicating a number of sets to be printed.

3. An image forming system according to claim 1 or 2, wherein the accepting unit accepts the information indicating a paper size.

4. An image forming system according to any preceding claim, wherein the accepting unit accepts the information indicating whether or not sorting of the paper is necessary.

5. An image scanning device, which stores image data obtained by scanning an original document into a remote storage device, the image scanning device comprising:
an accepting unit arranged to accept information relating to printing of an image by a remote image forming device,
an assigning unit arranged to assign a file name including the information accepted by the accepting unit to the scanned image data, and
a storage unit arranged to store the image data having the assigned file name into the remote storage device.

6. An image scanning device according to claim 5, wherein the accepting unit accepts information indicating a number of sets to be printed.

7. An image scanning device according to claim 5 or 6, wherein the accepting unit accepts information indicating a paper size.

8. An image scanning device according to any of claims 5 to 7, wherein the accepting unit accepts information indicating whether or not sorting of the paper is necessary.

9. A control device, which controls an image forming device to print image data stored in a storage device, the control device comprising:
a control unit arranged to control printing by the image forming device in accordance with information included in a file name of the image data stored in the storage device.

10. A control device according to claim 9, wherein the control unit controls the image forming device in accordance with information indicating a number of sets to be printed included in the file name.

11. A control device according to claim 9 or 10, wherein the control unit controls the image forming device in accordance with information indicating a paper size included in the file name.

12. A control device according to any of claims 9 to 11, wherein the control unit controls the image forming device in accordance with information indicating whether or not sorting of paper is necessary included in the file name.
